# FASCICULE DE BREVET EUROPEEN

(11) **EP 4 240 049 B1**
(45) Date de publication et mention de la délivrance du brevet: **17.12.2025**
(21) Numéro de dépôt: 23158568.8
(22) Date de dépôt: 24.02.2023
(51) Int. Cl.: H04W 24/02, H04W 84/12, H04W 16/14

(54) **PROCEDE DE SELECTION DE CANAUX OPERATIONNELS DANS UN RESEAU DE COMMUNICATIONS ET RESEAU DE COMMUNICATIONS IMPLEMENTANT LEDIT PROCEDE**
VERFAHREN ZUR AUSWAHL VON BETRIEBSKANÄLEN IN EINEM KOMMUNIKATIONSNETZ UND KOMMUNIKATIONSNETZ ZUR DURCHFÜHRUNG DES VERFAHRENS
METHOD FOR SELECTING OPERATIONAL CHANNELS IN A COMMUNICATION NETWORK AND COMMUNICATION NETWORK IMPLEMENTING SAID METHOD

(30) Priorité: 01.03.2022 FR 2201790
(43) Date de publication de la demande: 06.09.2023
(73) Titulaire: Sagemcom Broadband SAS, 92270 Bois-Colombes (FR)
(72) Inventeur: LALAM, Massinissa, 92500 RUEIL MALMAISON (FR); ALARCON, Laurent, 92500 RUEIL MALMAISON (FR); FAYE, Stanislas, 92500 RUEIL MALMAISON (FR)
(74) Mandataire: Cabinet Le Guen Maillet

(56) Documents cités:
- WO-A1-2021/147355
- FR-A1- 3 112 264
- US-A1- 2012 257 585
- US-A1- 2021 368 362

## Description

### DOMAINE TECHNIQUE

Au moins un mode de réalisation concerne un procédé de sélection de canaux opérationnels dans un réseau de communications comprenant une pluralité de nœuds de collecte connectés entre eux par des liens filaires et des liens sans fil. Au moins un autre mode de réalisation concerne un réseau de communications implémentant ledit procédé de sélection de canaux opérationnels.

### ETAT DE LA TECHNIQUE ANTERIEURE

Un réseau de communication sans fil (ci-après « réseau ») conforme à l'une des normes IEEE 802.11 comprend typiquement une pluralité de nœuds. Chaque nœud est un dispositif électronique comprenant *a minima* un module radiofréquence permettant l'établissement de communications conformément à une ou plusieurs normes IEEE 802.11, ou dit autrement, conformément à un ou plusieurs protocoles Wi-Fi. Un tel réseau comprend typiquement un dispositif électronique, communément appelé point d'accès (« Access Point » en anglais, ou « AP ») et une pluralité de dispositifs électroniques dits utilisateurs (ou clients) pouvant établir des connexions sans fil avec le point d'accès et/ou entre eux. Dans un environnement résidentiel, le dispositif électronique point d'accès est typiquement une « box » fournie par un opérateur Internet, c'est-à-dire une passerelle domestique (« home gateway », ou « residential gateway ». en anglais). Les dispositifs électroniques utilisateurs sont typiquement des ordinateurs, télévisions, tablettes ou téléphones dits « intelligents » (« smartphone » en anglais). On dit ainsi communément que les dispositifs électroniques utilisateurs sont associés « en Wi-Fi » avec le point d'accès.

L'architecture d'un réseau Wi-Fi peut aussi être distribuée, afin par exemple d'étendre la portée du réseau et/ou d'augmenter ses performances, par l'utilisation d'une pluralité de points d'accès. L'architecture d'un réseau Wi-Fi distribuée est différente de la précédente architecture succinctement décrite. Un réseau Wi-Fi distribué comprend généralement deux réseaux d'accès. Il comprend un réseau d'accès dit de collecte ou d'infrastructure (encore appelé réseau *backhaul*)*,* permettant de relier les points d'accès entre eux et de constituer une infrastructure réseau suivant une architecture réseau de type mixte étoile et/ou chaîne. Ce réseau de collecte peut être un réseau sans fil (par exemple Wi-Fi), filaire (par exemple Ethernet) ou un mélange des deux. Il comprend en outre un réseau d'accès dit utilisateur ou client (encore appelé réseau *fronthaul*)*,* permettant une connexion de nœuds (ou dispositifs électroniques) dits utilisateurs (ou clients) au réseau Wi-Fi distribué.

Il est connu que chaque nœud du réseau *backhaul* sélectionne un canal radio (e.g. canal primaire dans le cas du Wi-Fi), dit canal opérationnel, ou une bande radio, dite bande opérationnelle, correspondant à une agrégation de canaux opérationnels (e.g. canal primaire et canaux secondaires dans le cas du Wi-Fi) qu'il utilise alors pour communiquer avec les autres nœuds du réseau *backhaul.* A cet effet, un procédé de sélection automatique de canal opérationnel, dit procédé ACS (acronyme anglais de « Automatic Channel Selection »), est par exemple mis en œuvre afin de sélectionner, pour chaque nœud, un canal opérationnel ou une bande opérationnelle de sorte à minimiser les interférences avec les autres nœuds. Par définition, des nœuds appartenant à même sous-ensemble de nœuds peuvent utiliser le même canal opérationnel ou la même bande opérationnelle afin de communiquer entre eux.

Cette sélection automatique de canal opérationnel est généralement effectuée par un nœud unique, dit nœud maître, qui répercute ses décisions sur l'ensemble des autres nœuds du réseau. La sélection peut également être effectuée indépendamment au niveau de chaque sous-ensemble de nœuds par un nœud unique dudit sous-ensemble, dit nœud coordinateur ou nœud sous-maître, qui répercute ses décisions sur l'ensemble des autres nœuds du sous-ensemble. Toutefois, ces solutions sont sous-optimales en termes de performances de communication. En effet, si deux sous-ensembles de nœuds visibles l'un par l'autre d'un point de vue propagation radio utilisent des canaux opérationnels proches, les performances en termes de communication peuvent s'en trouver dégradées notamment à cause des mécanismes d'accès au média mis en œuvre au sein des réseaux Wi-Fi.

Le document US 2021/368362 A1 décrit des procédés -d'optimisation dans un système Wi-Fi distribué.

Il est souhaitable de pallier ces différents inconvénients de l'état de la technique. Il est notamment souhaitable de proposer un procédé de sélection de canaux opérationnels dans un réseau de communications qui soit plus performant en termes de communication.

### EXPOSE DE L'INVENTION

Au moins un mode de réalisation concerne un procédé de sélection de canaux opérationnels dans un réseau de communications comprenant une pluralité de nœuds de collecte connectés entre eux par des liens filaires et des liens sans fil. Le procédé étant caractérisé en ce que les nœuds connectés entre eux uniquement par des liens sans fil forment une branche, les branches étant connectées entre elles par des liens filaires. Le procédé comprend :
pour chaque branche, sélectionner au moins un canal opérationnel, utiliser ledit au moins un canal opérationnel sélectionné pour envoyer des trames de balise et informer les autres branches du réseau de communications de sa sélection ;
- pour chaque branche, déterminer s'il existe au moins un canal opérationnel sélectionné en commun entre ladite branche et une autre branche ;
- identifier au moins un groupe de branches dans lequel chaque branche a au moins un canal opérationnel sélectionné en commun avec une autre branche dudit groupe et dans lequel chaque branche voit d'un point de vue propagation radio au moins une autre branche dudit ensemble ;
- pour chaque groupe de branches identifié, sélectionner au moins un canal opérationnel en réalignant au sein du groupe les sélections d'au moins un canal opérationnel faites par branche;
- pour chaque groupe de branches, appliquer le au moins un canal opérationnel sélectionné par ledit groupe.

Ainsi, en réalignant au sein du groupe les sélections d'au moins un canal opérationnel faites par branche, les performances en termes de communication sont améliorées.

Dans un mode de réalisation, identifier au moins un groupe de branches comprend :
- pour chaque branche avec au moins un canal sélectionné en commun avec une autre branche, détecter les autres branches vues d'un point de vue propagation radio par ladite branche, une branche étant vue par une autre branche si un nœud de ladite branche perçoit un signal en provenance d'un nœud de l'autre branche avec un niveau de signal supérieur à une valeur de seuil ; et
- identifier au moins un groupe de branches en réponse auxdites détections.

Dans un mode de réalisation, pour chaque groupe de branches identifié, sélectionner au moins un canal opérationnel en réalignant au sein du groupe les sélections d'au moins un canal opérationnel faites par branche comprend sélectionner, pour ledit groupe identifié, ledit au moins un canal opérationnel de la branche du groupe qui voit le plus de branches d'un point de vue propagation radio.

Dans un mode de réalisation, sélectionner, pour ledit groupe identifié, ledit au moins un canal opérationnel de la branche du groupe qui voit le plus de branches d'un point de vue propagation radio comprend en cas d'égalité entre deux branches sélectionner ledit au moins un canal opérationnel de la branche parmi lesdites deux branches avec un score le plus élevé, ledit score étant représentatif d'un pourcentage de temps libre de transmission .

Dans un mode de réalisation, sélectionner, pour ledit groupe identifié, ledit au moins un canal opérationnel de la branche du groupe qui voit le plus de branches d'un point de vue propagation radio comprend en cas d'égalité entre deux branches sélectionner ledit au moins un canal opérationnel de la branche parmi lesdites deux branches dont un nœud coordinateur a l'adresse MAC la plus petite.

Dans un mode de réalisation, sélectionner, pour ledit groupe identifié, ledit au moins un canal opérationnel de la branche du groupe qui voit le plus de branches d'un point de vue propagation radio comprend en cas d'égalité entre deux branches sélectionner ledit au moins un canal opérationnel de la branche parmi lesdites deux branches dont un nœud coordinateur a l'adresse MAC la plus grande.

Au moins un autre mode de réalisation concerne un réseau de communications comprenant une pluralité de nœuds de collecte connectés entre eux par des liens filaires et des liens sans fil. Le réseau de communications étant caractérisé en ce que les nœuds connectés entre eux uniquement par des liens sans fil forment une branche, les branches étant connectées entre elles par des liens filaires. Le réseau de communications est configuré pour :
pour chaque branche, sélectionner au moins un canal opérationnel, utiliser ledit au moins un canal opérationnel sélectionné pour envoyer des trames de balise et informer les autres branches du réseau de communications de sa sélection ;
- pour chaque branche, déterminer s'il existe au moins un canal opérationnel sélectionné en commun entre ladite branche et une autre branche ;
- identifier au moins un groupe de branches dans lequel chaque branche a au moins un canal opérationnel sélectionné en commun avec une autre branche dudit groupe et dans lequel chaque branche voit d'un point de vue propagation radio au moins une autre branche dudit ensemble ;
- pour chaque groupe de branches identifié, sélectionner au moins un canal opérationnel en réalignant au sein du groupe les sélections d'au moins un canal opérationnel faites par branche;
- pour chaque groupe de branches, appliquer le au moins un canal opérationnel sélectionné par ledit groupe.

Un dispositif de sélection de canaux opérationnels dans un réseau de communications est également décrit. Le réseau de communications comprend une pluralité de nœuds de collecte connectés entre eux par des liens filaires et des liens sans fil, les nœuds connectés entre eux uniquement par des liens sans fil formant une branche, les branches étant connectées entre elles par des liens filaires, chaque branche, sélectionnant au moins un canal opérationnel, utilisant ledit au moins un canal opérationnel sélectionné pour envoyer des trames de balise et informant les autres branches du réseau de communications de sa sélection. Le dispositif de sélection de canaux opérationnels est configuré pour :
- pour chaque branche, déterminer s'il existe au moins un canal opérationnel sélectionné en commun entre ladite branche et une autre branche ;
- identifier au moins un groupe de branches dans lequel chaque branche a au moins un canal opérationnel sélectionné en commun avec une autre branche dudit groupe et dans lequel chaque branche voit d'un point de vue propagation radio au moins une autre branche dudit ensemble ;
- pour chaque groupe de branches identifié, sélectionner au moins un canal opérationnel en réalignant au sein du groupe les sélections d'au moins un canal opérationnel faites par branche;
- pour chaque groupe de branches, configurer le canal opérationnel à appliquer avec le au moins un canal opérationnel sélectionné pour ledit groupe.

Un produit programme d'ordinateur est également décrit qui comprend des instructions pour mettre en œuvre le procédé de sélection de canaux opérationnels selon l'un quelconque des modes de réalisation décrits précédemment, lorsque ledit programme est exécuté par un processeur.

Un support de stockage est également décrit qui stocke un programme d'ordinateur comprenant des instructions pour mettre en œuvre le procédé de sélection de canaux opérationnels selon l'un quelconque des modes de réalisation décrits précédemment, lorsque ledit programme est exécuté par un processeur.

### BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :
[Fig. 1] illustre de façon schématique un réseau de communications dans lequel des modes de réalisation peuvent être implémentés ;
[Fig. 2] illustre de façon schématique un réseau de communications dans lequel des modes de réalisation peuvent être implémentés ;
[Fig. 3] illustre de façon schématique un autre exemple de réseau de communications dans lequel des modes de réalisation peuvent être implémentés ;
[Fig. 4] illustre schématiquement un procédé de sélection de canaux opérationnels dans un réseau Wi-Fi selon un mode de réalisation particulier ;
[Fig. 5] illustre en détails une étape du procédé de sélection de canaux opérationnels selon un mode particulier de réalisation ;
[Fig. 6] illustre une première partie d'une variante de réalisation d'une étape du procédé de sélection de canaux opérationnels ;
[Fig. 7] illustre une seconde partie d'une variante de réalisation d'une étape du procédé de sélection de canaux opérationnels ;
[Fig. 8] représente un réseau comprenant des branches à chacune desquelles est associée une liste de canaux opérationnels et dans lequel est mise en œuvre la variante illustrée par les Figs 6 et 7 ;
[Fig. 9] représente le réseau illustré par la Fig. 8 après mise en œuvre de la variante illustrée par les Figs 6 et 7 ;
[Fig. 10] illustre schématiquement un exemple d'architecture matérielle d'un nœud de collecte selon un mode particulier de réalisation ; et
[Fig. 11] illustre schématiquement un exemple d'architecture matérielle d'un dispositif de sélection de canaux opérationnels selon un mode particulier de réalisation.

### EXPOSE DETAILLE DE MODES DE REALISATION

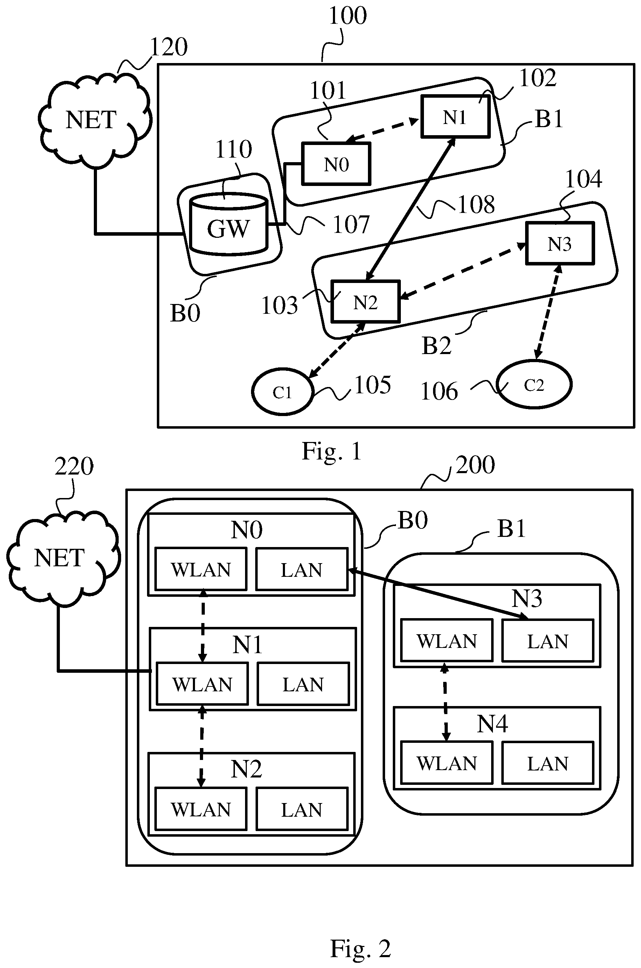

La **Fig. 1** illustre de façon schématique un réseau de communications 100 dans lequel des modes de réalisation peuvent être implémentés. Le réseau distribué 100 comprend une passerelle 110 (ou « gateway » en anglais) et une pluralité de nœuds ou dispositifs électroniques N0 101, N1 102, N2 103, N3 104, C1 105 et C2 106. La passerelle 110 permet une interconnexion du réseau 100 avec un réseau 120, par exemple le réseau Internet. Dans cet exemple, les nœuds N0, N1, N2 et N3 sont des nœuds dits de collecte. Les nœuds C1 et C2 sont deux nœuds utilisateurs connectés à des nœuds de collecte (respectivement les nœuds N2 et N3). La passerelle 110 et les nœuds N0, N1, N2 et N3 constituent ainsi l'infrastructure de collecte du réseau 100. Chaque nœud de collecte N0, N1, N2 ou N3 peut donc établir une connexion vers un autre nœud de collecte afin de constituer l'infrastructure de collecte du réseau distribué 100. Les nœuds de collecte peuvent être connectés entre eux via une liaison filaire, par exemple de type Ethernet ou via une liaison sans fil. Sur la Fig.1, les liaisons filaires sont représentées par un trait plein et les liaisons sans fil par un trait en pointillés.

Ainsi, dans l'exemple illustré par la Fig. 1, le nœud N0 101 est connecté de façon filaire à la passerelle GW 110 et au nœud N2 103, par exemple via une connexion Ethernet. Le nœud N0 101 est connecté par liaison sans fil au nœud N1 102. De même, les nœuds N2 103 et N3 104 sont connectés par liaison sans fil. Un tel réseau *backhaul* est dit hybride car composé de liaisons filaires et sans fil. Dans le réseau *backhaul,* les nœuds connectés entre eux uniquement par des liaisons sans fil forment une branche. Ainsi, sur la Fig. 1, le réseau *backhaul* comprend 3 branches B0, B 1 et B2. La première branche B0 comprend la passerelle 110, la seconde branche B1 comprend les nœuds N0 et N1 et la troisième branche comprend les nœuds N2 et N3. Ces trois branches sont reliées entre elles par les liaisons filaires 107 et 108.

La **Fig.2** illustre de façon schématique un autre réseau de communications 200 dans lequel des modes de réalisation peuvent être implémentés. Le réseau de communications 200 comprend une pluralité de nœuds ou dispositifs électroniques N0, N1, N2, N3 et N4. Chacun de ces nœuds peut être une passerelle résidentielle, un extendeur, une set-top-box. Le nœud N1 permet une interconnexion du réseau 200 avec un réseau 220, par exemple un réseau de type « World Area Network » ou « WAN » tel que le réseau Internet. Dans cet exemple, les nœuds N0, N1, N2, N3 et N4 sont des nœuds dits de collecte. Ces nœuds N0, N1, N2, N3 et N4 constituent l'infrastructure de collecte ou réseau *backhaul* du réseau 200. Le réseau de communications 200 peut comprendre des nœuds utilisateurs (non représentés sur la Fig.2) connectés au réseau *fronthaul* diffusé par les nœuds de collecte.

Chacun des nœuds de collecte dispose d'au moins une interface WLAN (acronyme anglais de « Wireless Local Area Network ») et d'au moins une interface LAN (acronyme anglais de « Local Area Network ») afin de se connecter à d'autres nœuds. Plusieurs nœuds peuvent se connecter à la même interface WLAN d'un autre nœud situé plus haut dans la topologie du réseau. Toutefois, un seul nœud peut se connecter directement à une interface LAN d'un autre nœud situé plus haut dans la topologie du réseau. Sur la Fig.2, les liaisons filaires sont représentées par un trait plein et les liaisons sans fil par un trait en pointillés. Ainsi, les nœuds N0 et N1 sont connectés par un lien sans fil au travers de leurs interfaces WLAN. Les nœuds N0 et N3 sont connectés par un lien filaire au travers de leurs interfaces LAN. Le nœud N1 et le nœud N2 sont connectés par lien sans fil au travers de leurs interfaces WLAN. Le nœud N3 et le nœud N4 sont connectés par lien sans fil au travers de leurs interfaces WLAN. Ainsi le réseau de communications 200 est un réseau hybride dans lequel coexistent des liens filaires et des liens sans fil.

Dans le réseau de communications 200, il existe deux branches B0 et B1. La branche B0 comprend les nœuds N0, N1 et N2 et la branche B1 comprend les nœuds N3 et N4, une branche étant un ensemble de nœuds connectés entre eux uniquement par liens sans fil via leur interface WLAN. Les branches sont connectées entre elles uniquement par un lien filaire, i.e., que l'interface LAN d'un nœud d'une branche, i.e. le nœud N0 de la branche B0 sur la Fig. 2, est connectée à l'interface LAN d'un autre nœud d'une autre branche, i.e. le nœud N3 de la branche B1 sur la Fig. 2.

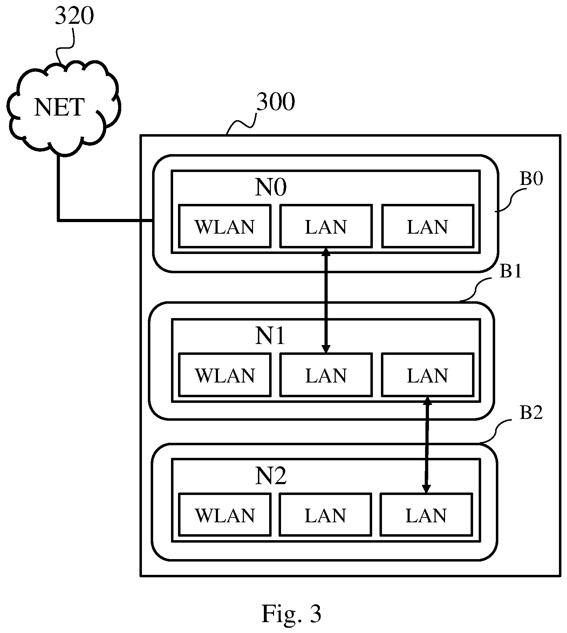

La **Fig.3** illustre de façon schématique un autre exemple de réseau de communications 300 dans lequel des modes de réalisation peuvent être implémentés. Le réseau de communications 300 comprend une pluralité de nœuds ou dispositifs électroniques N0, N1 et N2. Chacun de ces nœuds peut être une passerelle résidentielle, un extendeur, une set-top-box. Le nœud N0 permet une interconnexion du réseau 300 avec un réseau 320, par exemple le réseau Internet. Dans cet exemple, les nœuds N0, N1 et N2 sont des nœuds dits de collecte. Ces nœuds N0, N1 et N2 constituent l'infrastructure de collecte du réseau 300. Le réseau de communications 300 peut comprendre des nœuds utilisateurs (non représentés sur la Fig.3) connectés aux nœuds de collecte.

Chacun des nœuds de collecte dispose d'au moins une interface WLAN (acronyme anglais de « Wireless Local Area Network ») et d'au moins une interface LAN (acronyme anglais de « Local Area Network ») afin de se connecter à d'autres nœuds. Plusieurs nœuds peuvent se connecter à la même interface WLAN d'un autre nœud situé plus haut dans la topologie du réseau. Toutefois, un seul nœud peut se connecter directement à une interface LAN d'un autre nœud. Sur la Fig.3, les liaisons filaires sont représentées par un trait plein. Ainsi, le nœud N0 et le nœud N1 sont connectés par un lien filaire au travers d'une paire de leurs interfaces LAN. Le nœud N1 et le nœud N2 sont connectés par un lien filaire au travers d'une paire de leurs interfaces LAN. Les interfaces LAN du nœud N1 le reliant au nœud N0 et N2 respectivement étant différentes (e.g. des ports Ethernet différents). Dans le réseau de communications 300, il existe trois branches B0, B1 et B2. Chaque branche comprend un seul nœud.

La topologie complète du réseau de communications 200 ou 300 est considérée comme étant accessible à tous les nœuds de collecte du réseau. Généralement, il existe un élément logiciel, dit élément logiciel maître, qui coordonne le fonctionnement de tous les nœuds du réseau. Cet élément logiciel maître peut être stocké dans un nœud directement connecté à Internet, e.g. dans le nœud N1 de la Fig. 2 ou le nœud N0 de la Fig. 3. Dans des variantes, cet élément logiciel maître est stocké dans n'importe quel nœud de collecte du réseau ou dans un élément externe au réseau (e.g. un serveur dans le cloud). Cet élément logiciel maître a la charge de maintenir et communiquer à chaque nœud du réseau (via des protocoles de communications standardisés, e.g. IEEE 1905,-ou via un bus logiciel tel que décrit dans le document FR2984554) la topologie globale de tout le réseau. Ainsi, chaque nœud peut identifier à quelle branche appartient un autre nœud du réseau.

Chaque branche des réseaux 200 ou 300 est configurée pour mettre en œuvre un procédé de sélection automatique de canal ACS afin de choisir un canal opérationnel (e.g. canal primaire dans le cas du Wi-Fi) ou une bande opérationnelle correspondant à une agrégation de canaux (e.g. canal primaire servant au contrôle et au management et canaux secondaires dans le cas du Wi-Fi). Un canal est généralement identifié par un indice. Par exemple dans la bande des 5 GHz, le canal d'indice 36 est centré sur la fréquence 5,180 GHz et le canal d'indice 44 est centré sur la fréquence 5,22 GHz. Les indices des canaux sont bien connus, chaque canal étant défini par sa fréquence centrale. En Wi-Fi on associe à un canal une largeur de bande égale à 20 MHz (22 MHz pour les modulations de l'amendement 802.11b du groupe de normes IEEE 802.11) de sorte que lorsqu'on parle par exemple d'un canal primaire égal à 36, on veut dire une fréquence centrale de 5,180 GHz et une largeur de bande de 20 MHz.

La mise en œuvre du procédé de sélection automatique de canal ACS peut être effectuée par un nœud coordinateur sélectionné dans la branche. Les canaux opérationnels ainsi sélectionnés par le nœud coordinateur sont appliqués à tous les nœuds appartenant à la même branche que lui. Si de tels nœuds coordinateurs sont mis en place, alors chaque nœud coordinateur de branche connait l'identité des autres nœuds coordinateurs via l'élément logiciel maître.

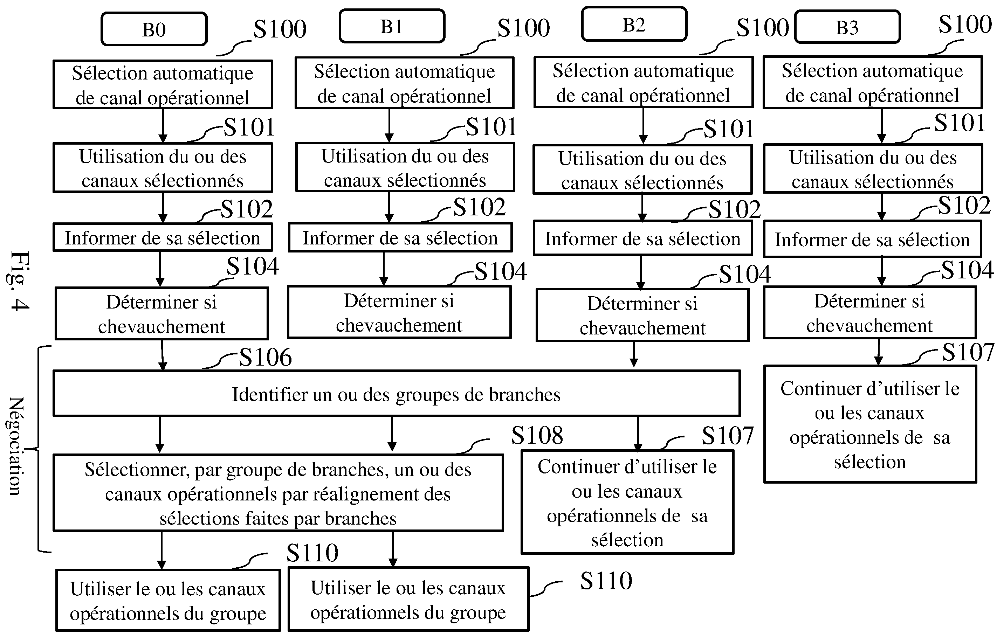

La **Fig. 4** illustre schématiquement un procédé de sélection de canaux opérationnels dans un réseau de communications selon un mode de réalisation particulier. Dans l'exemple de la figure Fig.4, le réseau de communications comprend 4 branches B0, B1, B2, B3. Le procédé peut être mis en œuvre par des nœuds coordinateurs sélectionnés dans chaque branche. Par la suite, on parlera de branche uniquement, les informations transmises étant soit distribuées à tous les nœuds de la branche soit au nœud coordinateur de la branche s'il existe.

Lors d'une étape S100, chaque branche, e.g. chaque nœud coordinateur de ladite branche, met en œuvre de manière indépendante des autres branches un procédé de sélection automatique de canal opérationnel ACS et utilise le ou les canaux opérationnels de sa sélection pour envoyer des trames de balise (« beacon frames » en anglais).

Un tel procédé peut se baser sur la sélection des canaux opérationnels présentant le plus de temps libre de transmission (« transmit opportunity » en anglais) vu par le nœud coordinateur sur une durée d'observation donnée par exemple. Cette étape consiste à déterminer une pluralité de listes de canaux opérationnels ou une pluralité de bandes opérationnelles (e.g. [36, 40, 44, 48] avec 36 comme canal primaire et [36, 40, 44, 48] avec 40 comme canal primaire), chaque liste ou bande étant optionnellement associée à un score représentatif du résultat du procédé ACS (par exemple le pourcentage de temps libre de transmission observé). Une liste de canaux opérationnels comprend soit un unique canal opérationnel, e.g. un unique canal primaire, soit une pluralité de canaux opérationnels, e.g. un canal primaire et une pluralité de canaux secondaires.

Le procédé ACS sélectionne une liste de canaux opérationnels (ou une bande opérationnelle) parmi la pluralité de listes, e.g. celle avec le plus grand score, et définit ainsi une liste de canaux opérationnels pouvant être utilisés par les nœuds de la branche. Lors d'une étape S101, chaque branche utilise le ou les canaux opérationnels de sa sélection, i.e. celui ou ceux déterminés à l'étape S100, e.g. pour envoyer des trames de balise (« beacon frames » en anglais).Cette étape doit s'effectuer avant l'étape S106 décrite plus loin.

Lors d'une étape S102, chaque branche informe les autres branches du résultat de sa sélection automatique de canal ACS, i.e. chaque branche communique aux autres branches les canaux opérationnels sélectionnés. Optionnellement, le score associé à cette sélection est également communiqué.

Lors d'une étape S104, chaque branche détermine s'il existe au moins un canal opérationnel sélectionné en commun entre ladite branche et une autre branche. Autrement dit, chaque branche détermine s'il existe un chevauchement de canaux opérationnels avec une autre branche, i.e. si le résultat de sa sélection automatique de canal ACS et tout ou partie du résultat de sélection automatique de canal ACS d'une autre branche se chevauchent (« overlapping » en anglais). Un chevauchement de canaux opérationnels entre deux branches se traduit par l'existence d'au moins un canal commun aux listes de canaux opérationnels sélectionnés à l'étape S100 par le procédé ACS dans chacune des deux branches. Par exemple, en Wi-Fi, la branche B0 sélectionne les canaux opérationnels [36, 40, 44, 48] avec le canal 36 comme canal primaire, la branche B 1 sélectionne les canaux opérationnels [44, 48] avec le canal 44 comme canal primaire. Il existe donc un chevauchement puisque les canaux opérationnels 44 et 48 sont communs aux deux listes. Dans l'exemple de la Fig. 4, on suppose que B0 détermine qu'il existe un chevauchement avec B1, B1 détermine qu'il existe un chevauchement avec B0 et B2, B2 détermine qu'il existe un chevauchement avec B1 et B3 détermine qu'il n'existe aucun chevauchement avec les autres branches. En cas de chevauchement, les branches concernées devront entreprendre une phase de négociation de canaux opérationnels (étapes S106 et S108). C'est le cas des branches B0, B1 et B2 sur la Fig. 4.

Si une branche ne présente aucun chevauchement avec l'une quelconque des autres branches du réseau alors aucune phase de négociation des canaux opérationnels n'est engagée par cette branche. C'est le cas de la branche B3 sur la Fig. 4. Cette branche continue d'utiliser (étape S107) le ou les canaux opérationnels de sa sélection, i.e. celui ou ceux déterminés à l'étape S100.

Lors d'une étape S106, un ou des groupes de branches sont identifiés. Un groupe de branches est un ensemble de branches dans lequel :
- chaque branche a au moins un canal sélectionné en commun avec une autre branche dudit groupe, i.e. qu'il existe au moins un chevauchement avec une autre branche dudit ensemble,
- chaque branche voit d'un point de vue propagation radio au moins une autre branche dudit ensemble.

On dit qu'une branche Bi voit d'un point de vue propagation radio une autre branche Bj dans le cas où au moins un nœud Nk de la banche Bi voit d'un point de vue propagation radio au moins un nœud Nl de Bj où i, j, k et 1 sont des indices, e.g. des entiers positifs, identifiant les branches et les nœuds. On dit qu'un nœud Ni voit d'un point de vue propagation radio un nœud Nj si le nœud Ni reçoit ou décode les signaux émis par Nj (e.g. les balises ou « beacons » en anglais) avec un niveau de signal supérieur à une valeur de seuil S, e.g. S = - 82 dBm à 20 MHz. Dans l'exemple de la Fig. 4, on suppose que, d'un point de vue propagation radio, B0 voit B1 et que B1 et B2 ne voient aucune autre branche. B0 et B1 appartiennent donc au même groupe car B0 voit B1 même si B1 ne voit pas B0. Dans le cas particulier où une branche n'est visible par aucune des autres branches du réseau, alors cette branche continue d'utiliser (étape S107) le ou les canaux opérationnels de sa sélection, i.e. celui ou ceux déterminés à l'étape S100. C'est le cas de la branche B2 sur la Fig. 4.

Lors d'une étape S108, les branches appartenant à un même groupe de branches négocient entre elles des canaux opérationnels de sorte à réaligner les sélections du procédé ACS effectuées indépendamment par branche à l'étape S100.

Autrement dit, pour un groupe de branches, réaligner les sélections du procédé ACS comprend sélectionner une unique liste de canaux opérationnels, toutes les branches dudit groupe utilisant cette unique liste de canaux opérationnels. C'est le cas des branches B0 et B1 sur la Fig.4. Dans un mode de réalisation particulier, cette unique liste de canaux opérationnels est la liste sélectionnée à l'étape S100 par l'une des branches du groupe qui impose donc sa sélection aux autres branches du groupe. Dans un mode particulier de réalisation, la branche Bk qui voit le plus de branches impose au groupe ses canaux opérationnels, i.e. ceux sélectionnés à l'étape S100. Nb_max est le nombre de branches visibles par Bk, Nb_max étant un entier positif.

En cas d'égalité, i.e. dans le cas où deux branches voient le même nombre Nb_max de branches, la branche avec le meilleur score ACS ou celle dont l'adresse MAC du nœud coordinateur est la plus petite (respectivement la plus grande) impose au groupe ses canaux opérationnels, i.e. ceux sélectionnés à l'étape S100. L'utilisation de l'adresse MAC du nœud coordinateur permet d'avoir un mécanisme déterministe de sélection des canaux opérationnels par groupe évitant ainsi des échanges supplémentaires entre les branches pour se coordonner. Cette approche permet à chaque branche de chaque groupe d'effectuer la détermination des canaux opérationnels à appliquer sans avoir à échanger d'autres informations que celles déjà échangées précédemment.

Lors d'une étape S110, les branches appliquent la sélection de canaux opérationnels faite à l'étape de négociation S108, i.e. qu'elles utilisent le ou les canaux opérationnels sélectionnés par groupe notamment pour envoyer des trames de balise. C'est le cas des branches B0 et B1 sur la Fig.4.

Dans un mode de réalisation particulier, la sélection est faite par un dispositif de sélection de canaux opérationnel dédié qui est notamment configuré pour mettre en œuvre les étapes S104 à S108. Ce dispositif configure, pour chaque groupe de branches, le canal opérationnel à appliquer avec le au moins un canal opérationnel sélectionné pour ledit groupe. Lors de l'étape S110, les branches appliquent les canaux opérationnels ainsi configurés.

Déterminer des chevauchements entre les branches et la visibilité d'un point de vue propagation radio d'une branche par une autre branche en vue d'identifier un ou des groupes de branches et déterminer si un réalignement des sélections de canaux opérationnels effectuées indépendamment par branche à l'étape S100 est nécessaire au sein de chaque groupe de branches permettent d'améliorer la communication. En particulier, le réalignement, pour les branches d'un même groupe de branches, des sélections de canaux opérationnels effectuées indépendamment par branche à l'étape S100 permet à chaque radio de ces dites branches de bénéficier des mécanismes de détection d'énergie et de détection de signal Wi-Fi sur le canal primaire et ainsi de mieux partager le medium en évitant au moins en partie les collisions.

En effet, avant de transmettre des données utiles sur le ou les canaux opérationnels sélectionnés, un nœud met en œuvre des mécanismes d'accès au média afin de vérifier la disponibilité dudit media. Par exemple, avant d'accéder au média, un nœud détecte sur tous les canaux opérationnels, i.e. le canal primaire et les canaux secondaires, qu'il n'y a pas d'énergie ou que celle-ci est inférieure à une valeur de seuil. En outre, sur le canal primaire uniquement, il détecte par le biais d'un décodage du signal Wi-Fi qu'il n'y a pas de transmission Wi-Fi en cours.

Ainsi, dans le cas où le canal primaire de la branche B0 est aligné avec le canal primaire de la branche B1 à l'issue de l'étape S108, un nœud N0 de la branche B0, avant d'accéder au média, fait une détection d'énergie et une détection de signal sur leur canal primaire commun ce qui permet de mieux détecter et donc partager le médium. En effet, si un réalignement n'est pas effectué et que, par exemple, le canal primaire de B1 corresponde au canal secondaire de B0, le nœud N0 de la branche B0 n'applique qu'une détection d'énergie sur le canal primaire de B1, i.e. pas de détection de signal. En ne faisant qu'une détection d'énergie, il se peut que le nœud N0 considère le média comme disponible alors qu'il ne l'est pas ce qui augmente le risque de collision.

Dans les cas où des branches sont suffisamment éloignées les unes des autres afin que leurs transmissions, même avec des canaux primaires différents, ne se gênent pas mutuellement, aucun réalignement des décisions des ACS n'est engagé. C'est le cas du nœud B2 sur la Fig. 4.

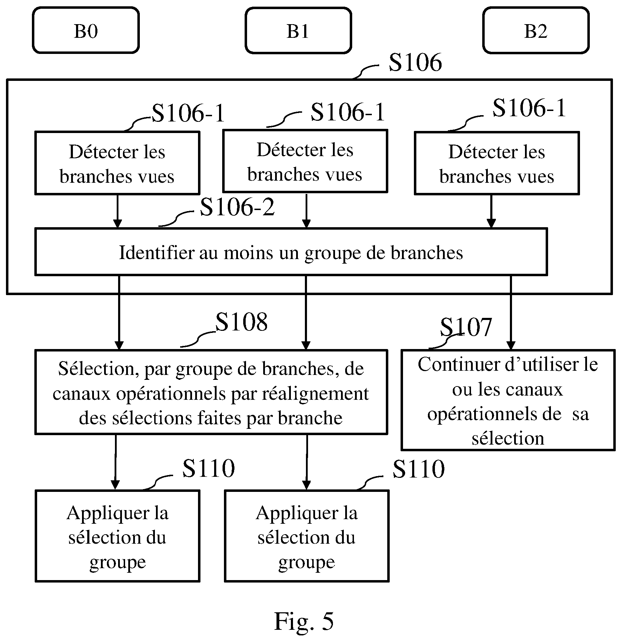

La **Fig. 5** illustre en détails l'étape S106 selon un mode particulier de réalisation.

Lors d'une étape S106-1, chaque branche détecte les autres branches visibles d'un point de vue propagation radio. Une branche Bj est visible d'une branche Bi si un nœud Nk de Bi voit au moins un nœud Nl de Bj avec un niveau de signal supérieur à un seuil S.

Le nœud Nk de Bi voit le nœud Nl de Bj si le niveau de signal reçu par Nk en provenance de Nl est supérieur à la valeur de seuil S.

A cet effet, chaque branche utilise le ou les canaux opérationnels de sa sélection, i.e. celui ou ceux déterminés à l'étape S100, e.g. pour envoyer des trames de balise (« beacon frames » en anglais). La détection des branches visibles d'un point de vue propagation radio peut alors se faire par exemple par la détection (« scan » en anglais) par les nœuds d'une branche donnée des trames de balise émises par les nœuds des autres branches. Plus précisément, un nœud Nₖ qui décode une trame (e.g. « beacon ») émise par un autre nœud Nₗ est capable d'estimer une valeur représentative de la puissance avec laquelle il reçoit ou décode ladite trame. Cette valeur est comparée au seuil S, e.g. S=-82 dBm. Si cette valeur est plus grande que S, alors le Noeud Nₖ voit d'un point de vue propagation radio le nœud Nₗ, sinon on considère qu'il ne le voit pas même s'il parvient à décoder la trame.

En variante, des équipements tiers (e.g. nœuds utilisateurs) associés à une branche peuvent se charger de cette détection. Dans l'exemple de la Fig. 5, on suppose comme pour la Fig.4 que B0 voit B1 et que B1 et B2 ne voient aucune autre branche.

Lors d'une étape S106-2, les groupes de branches sont identifiés. A cet effet, les résultats des détections de S106-1 sont partagés entre les branches entrées en phase de négociation, i.e. B0, B 1 et B2 sur la Fig. 5, afin de former les groupes de branches. Si une branche n'a été vue par aucune autre branche, alors elle sort de la phase de négociation. Par exemple sur la Fig. 5, la branche B2 qui n'est vue par aucune autre branche continue d'utiliser le ou les canaux opérationnels de sa sélection initiale faite à l'étape S100.

Si une branche Bj a été vue par au moins une branche Bi, alors ces deux branches appartiennent à un même groupe de branches. Au sein de ce groupe, qui peut comporter plus de deux branches, au moins une branche en voit une autre. Par exemple, les branches B0 et B1 appartiennent au même groupe car B0 a vu B1, même si B1 n'a pas vu B0.

A l'issue de l'étape S106-2, chaque branche au sein d'un groupe peut être perturbée par les autres branches du même groupe. En revanche, les branches d'un groupe ne peuvent pas être perturbées par les branches d'un autre groupe car elles ne sont pas visibles l'une de l'autre. Lors de l'étape S108, une liste de canaux opérationnels est sélectionnée au sein de chaque groupe identifié grâce à un réalignement des sélections ACS effectuées à l'étape S100 par branche. La sélection pour un groupe donné est effectuée indépendamment des autres groupes. Chaque groupe de branches sélectionne ainsi des canaux opérationnels applicables à toutes les branches du groupe.

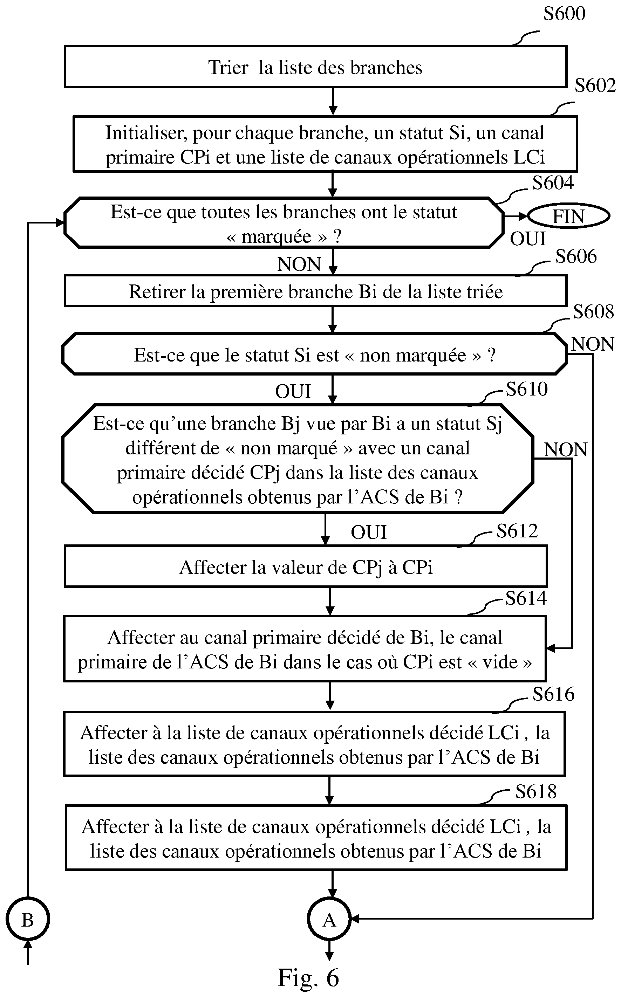

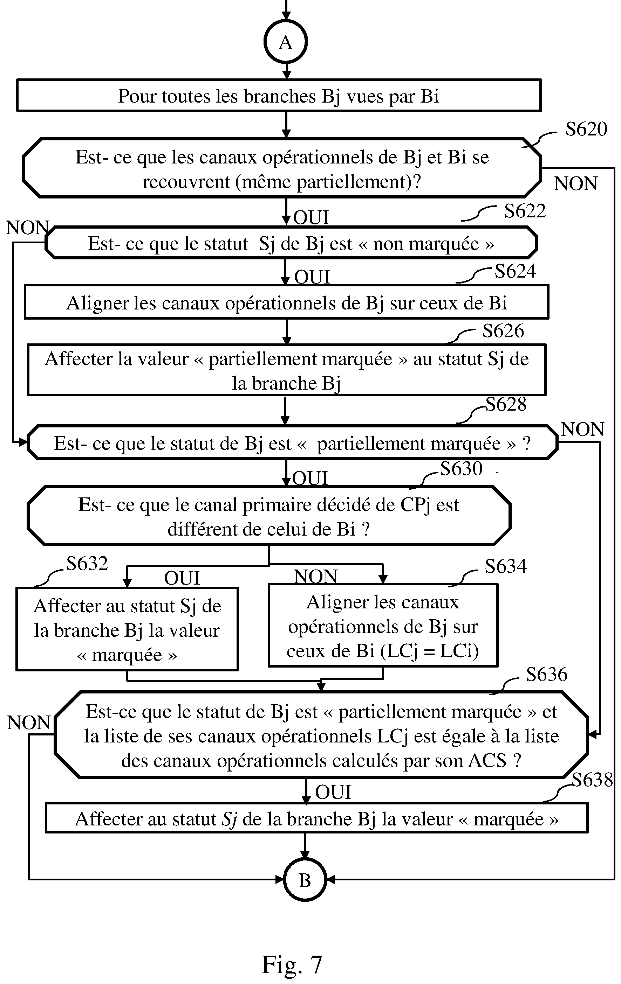

Les **Figs 6** **et** **7** illustrent un exemple de réalisation du procédé mis en œuvre à l'étape S108. Cette variante est notamment avantageuse dans le cas où le nombre de canaux opérationnels de chaque branche d'un même groupe est différent. Par exemple en Wi-Fi, une branche peut avoir sélectionné les canaux [36 (canal primaire), 40 (canal secondaire à 20 MHz)] à l'étape S100 et une autre branche appartenant au même groupe peut avoir sélectionné les canaux [36-40 (canal secondaire à 40 MHz), 44 (canal primaire), 48 (canal secondaire à 20 MHz)] à l'étape S100, soit des bandes passantes de 40 et 80 MHz, respectivement.

Lors d'une étape S600, les branches du groupe sont triées en fonction du nombre de leurs canaux opérationnels sélectionnés à l'étape S100. Plus précisément, la branche avec le plus petit nombre de canaux opérationnels est placée en premier et ainsi de suite pour les autres branches. La branche avec le plus grand nombre de canaux opérationnels est donc placée en dernier dans la liste.

En cas d'égalité entre deux branches, la branche Bk qui voit le plus de branches (ce nombre entier positif étant noté Nb_max) est placée en premier et ainsi de suite.

En cas d'égalité, i.e. dans le cas où deux branches voient le même nombre Nb_max de branches, la branche avec le meilleur score ACS ou celle dont l'adresse MAC du nœud coordinateur est la plus petite (respectivement la plus grande) est placée en premier.

Lors d'une étape S602, les branches sont initialisées. A cet effet, à chaque branche Bk est attribué un statut Sk initialisé à « non marquée », un canal primaire CPk initialement vide et une liste de canaux opérationnels LCk initialement vide. Au cours du déroulement du procédé, le statut Sk peut prendre les valeurs suivantes :
- « non marquée » signifiant que la branche n'a pas encore été traitée ;
- « partiellement marquée » signifiant que la branche a été partiellement traitée, c'est-à-dire qu'une partie de ses canaux opérationnels a été fixée (dont le canal primaire) ;
- « marquée » signifiant que la branche a tous ses canaux opérationnels fixés, ceux-ci pouvant être différents de ceux obtenus par son ACS à l'étape S100.

Lors d'une étape S604, le statut de toutes les branches est vérifié. Si toutes les branches ont un statut qui est « marquée » alors le procédé prend fin, sinon il continue à l'étape S606. Lors de l'étape S606, la première branche de la liste est alors retirée de la liste triée et est considérée dans la suite comme branche courante et notée Bi.

Lors d'une étape S608, le statut Si de la branche courante Bi est vérifié. Dans le cas où Si est « non marquée », alors le procédé continue à une étape S610, sinon il continue à un embranchement A.

Lors de l'étape S610, le statut de chaque branche Bj vues par Bi est vérifié une par une (tant que le canal primaire CPi de la branche courante Bi est « vide »).

Dans le cas où une branche Bj vue par Bi a un statut Sj différent de « non marquée » avec un canal primaire CPj non « vide » (i.e. une valeur décidée, i.e. une valeur choisie par le procédé en train d'être effectué) qui se trouve dans la liste des canaux opérationnels obtenus par l'ACS de Bi à l'étape S100, le procédé continue à une étape S612. Sinon on passe à la branche voisine suivante (on continue la boucle).

Lors de l'étape S612, le canal primaire décidé, i.e. sa valeur ayant été choisie, de la branche voisine Bj est affecté au canal primaire décidé de Bi, i.e. CPi = CPj. Le procédé passe alors à l'étape S614 (sortie de boucle).

Lors de l'étape S614, dans le cas où le canal primaire décidé de Bi est « vide », affecter au canal primaire décidé de Bi le canal primaire obtenu à l'étape S100 par l'ACS de Bi.

Lors de l'étape S616, la liste des canaux opérationnels obtenus par l'ACS de Bi sont affectés à la liste des canaux opérationnels LCi décidés de Bi.

Lors d'une étape S618, la valeur « marquée » est affectée au statut Si.

En référence à la Fig. 7, pour toutes les branches Bj vues par Bi, les étapes suivantes S620 à S638 sont répétées.

Lors d'une étape S620, les canaux opérationnels de Bi et ceux de Bj sont comparés. S'il se recouvrent (même partiellement), le procédé continue à l'étape S622, sinon il continue à un embranchement B.

Lors de l'étape S622, le statut de Bj est vérifié. Dans le cas où le statut Sj de Bj est « non marquée » le procédé continue à une étape S624. Sinon, il continue à une étape S628. Lors de l'étape S624, les canaux opérationnels de Bj sont alignés sur ceux de Bi, i.e. la valeur de CPi est affectée à CPj et la valeur de LCi est affectée à LCj.

Lors d'une étape S626, la valeur « partiellement marquée » est affectée au statut Sj de la branche Bj.

Lors de l'étape S628, le statut de Bj est vérifié. Dans le cas où le statut de Bj est « partiellement marquée » le procédé continue à l'étape S630, sinon il continue à une étape S636.

Lors d'une étape S630, le canal primaire décidé de Bj est comparé au canal primaire de Bi. Si le canal primaire de Bj est différent du canal primaire de Bi (i.e. CPi ≠ CPj), alors le procédé continue à une étape S632, sinon il continue à une étape S634.

Lors de l'étape S632, la valeur « marquée » est affectée au statut Sj de la branche Bj.

Lors de l'étape S634, les canaux opérationnels de Bj sont alignés sur ceux de Bi (LCj = LCi) Lors d'une étape S636, dans le cas où le statut de Bj est « partiellement marquée » et que la liste de ses canaux opérationnels LCj est égale à la liste des canaux opérationnels obtenus par son ACS à l'étape S100, le procédé continue à l'étape S638, sinon le procédé reprend à l'embranchement B.

Le procédé décrit en référence aux Figs 6 et 7 est plus simplement décrit par le pseudo-code ci-dessous :
Pour chaque branche Bi de la liste triée :
- Si son statut Si est « non marquée »,
   ∘ Pour toutes les branches Bj vues par Bi :
      ▪ Si le canal primaire *CPi* est vide :
         - Si le statut *Sj* de Bj est « partiellement marquée » ou « marquée »
            ∘ Si le canal primaire *CPj de Bj* se trouve dans la liste des canaux opérationnels calculée par l'ACS de Bi, alors on affecte *à CPi* le canal *CPj (CPi = CPj)*
   ∘ Si le canal primaire *CPi* est vide :
      ▪ On affecte *à CPi* la valeur obtenue par l'ACS de la branche Bi
   ∘ On confirme la liste des canaux opérationnels *LCi* de Bi comme étant la liste des canaux opérationnels calculée par l'ACS de Bi
   ∘ On donne le statut « marquée » à la branche Bi
- Pour toutes les branches Bj vues par Bi :
   ∘ Si les canaux opérationnels de Bi et ceux de Bj se recouvrent (même partiellement) :
      - Si le statut *Sj* de Bj est « non marquée »,
         ∘ On aligne les canaux opérationnels de Bj sur ceux de Bi (*CPj=CPi* et *LCj=LCi*)
         ∘ On donne le statut « partiellement marquée » à la branche Bj
      - Si le statut de Bj est « partiellement marquée » ou « marquée »
         ∘ Si le canal primaire de Bj est différent de celui de Bj (*CPi* ≠ *CPj*):
            ▪ Si le statut de Bj est « partiellement marquée »
               - On donne le statut « marquée » à la branche Bj et ainsi on n'étend pas la liste des canaux opérationnels de Bj sur celle de Bi (les primaires étant différent)
         o Si le canal primaire de Bj est égal à celui de Bj (*CPi = CPj*):
            ▪ Si le statut de Bj est « partiellement marquée »
               - On aligne les canaux opérationnels de Bj sur ceux de Bi (*LCj = LCi*)
      - Si le statut de Bj est « partiellement marquée » et que la liste de ses canaux opérationnels LPj est égale à la liste des canaux opérationnels calculés par son ACS,
         ∘ On donne le statut « marquée » à la branche Bj
   o Si toutes les branches sont marquées, on peut sortir de la boucle.

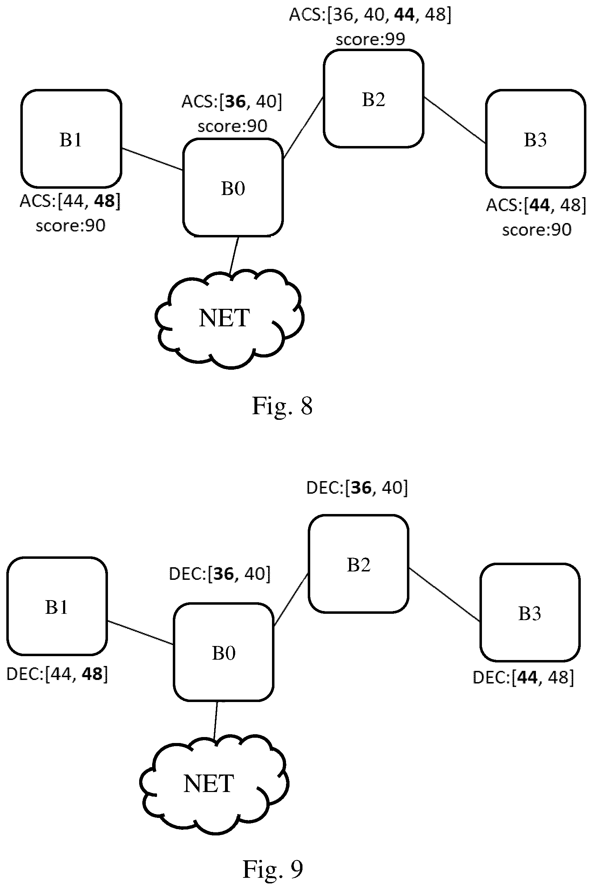

La **Fig. 8** représente un réseau comprenant des branches B0 à B3 à chacune desquelles est associée une liste de canaux opérationnels déterminés lors de l'étape S100 et dans lequel est mise en œuvre l'étape S108-3 décrite en lien avec les Figs 6 et 7. Ces branches B0 à B3 appartiennent à un même groupe.

Dans cet exemple, on considère que la branche B0 voit la branche B1 et la branche B2. Lors de l'étape S100, la branche B0 a sélectionné pour canaux opérationnels, les canaux [36, 40] avec un score de 90, le canal primaire (en gras) étant le canal 36. On considère que la branche B1 voit la branche B0. Lors de l'étape S100, la branche B1 a sélectionné pour canaux opérationnels, les canaux [44, 48] avec un score de 90, le canal primaire (en gras) étant le canal 48. On considère que la branche B2 voit la branche B0 et la branche B3. Lors de l'étape S100, la branche B2 a sélectionné pour canaux opérationnels, les canaux [36, 40, 44, 48] avec un score de 99, le canal primaire (en gras) étant le canal 44. La branche B3 voit la branche B2. Lors de l'étape S100, la branche B3 a sélectionné pour canaux opérationnels, les canaux [44, 48] avec un score de 90, le canal primaire (en gras) étant le canal 44.

Les branches B0, B1, B2 et B3 qui appartiennent au même groupe vont donc appliquer l'étape S108-2 telle que décrite ci-dessus en référence aux Figs 6 et 7.

La liste triée des branches est alors [BO, B1, B3, B2]. La branche B0 est traitée en premier. Elle reçoit le statut « marquée ». B0 a pour décision [36,40]. Il n'y a pas de chevauchement avec la branche B1 qu'elle voit, donc B1 conserve son statut « non marquée ». En revanche, il y a chevauchement avec la branche B2 qu'elle voit et qui a le statut « non marquée ». B2 adopte comme nouveau canal primaire celui de B0 (i.e. le canal 36), i.e. CP2=CP0 et LP2=LPO=[36,40]. B2 reçoit le statut « partiellement marquée ». En effet, tous les canaux initialement affectés à B2, notamment les canaux 44 et 48, n'ont pas été traités, i.e. affectés à la liste LP2.

La branche B1 est ensuite traitée. Son statut est « non marquée », B1 reçoit le statut « marquée ». B1 a pour décision [44, 48].

La branche B3 est ensuite traitée. Son statut est « non marquée ». B3 reçoit le statut « marquée ». B3 a pour décision [44, 48]. La branche B2 a un chevauchement avec B3 et a un statut « partiellement marquée ». Le canal primaire de B2 (le canal 36) étant différent de celui de B3 (le canal 44), étendre les canaux opérationnels de B2 à ceux de B3 provoquerait un non-alignement de canaux primaires pour des branches visibles. On réduit donc le nombre de canaux opérationnels de B2 et on fige sa décision. B2 reçoit alors le statut « marqué ».

Toutes les branches ayant un statut « marquée », l'étape S108-2 se termine.

Les canaux opérationnels sélectionnés à l'issue de l'étape S108-2 sont illustrés sur la **Fig.9****.** Sur cette Fig.8, les branches B0 et B2 sont alignées, i.e. qu'elles utilisent les mêmes canaux opérationnels avec le même canal primaire. La branche B2 a réduit sa bande passante (i.e., son nombre de canaux opérationnels) afin d'éviter un chevauchement des canaux primaires avec B0 et B3 qu'elle voit, i.e. qui sont à sa portée. La branche B1 et la branche B3 n'ont pas leur canal primaire aligné mais elles ne sont pas visibles l'une par l'autre. On évite ainsi que des branches visibles l'une par l'autre choisissent des canaux primaires différents.

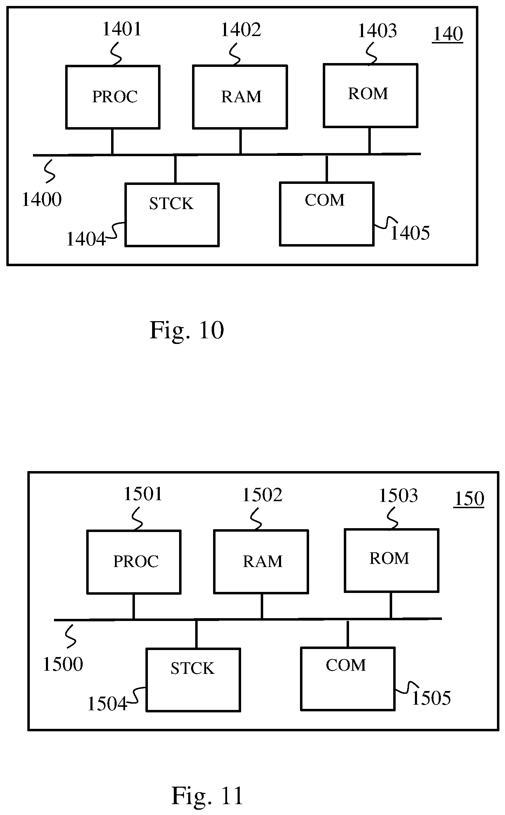

La **Fig. 10** illustre schématiquement un exemple d'architecture matérielle d'un nœud de collecte 140 selon un mode particulier de réalisation.

Selon l'exemple d'architecture matérielle représenté à la Fig. 10, le nœud de collecte 140 comprend alors, reliés par un bus de communication 1400 : un processeur ou CPU (« Central Processing Unit » en anglais) 1401 ; une mémoire vive RAM (« Random Access Memory » en anglais) 1402 ; une mémoire morte ROM (« Read Only Memory » en anglais) 1403 ; une unité de stockage 1404 telle qu'un disque dur ou telle qu'un lecteur de support de stockage, e.g. un lecteur de cartes SD (« Secure Digital » en anglais); au moins une interface de communication 1405 permettant au nœud de collecte 140 d'envoyer ou de recevoir des informations.

Le processeur 1401 est capable d'exécuter des instructions chargées dans la RAM 1402 à partir de la ROM 1403, d'une mémoire externe (non représentée), d'un support de stockage (tel qu'une carte SD), ou d'un réseau de communication. Lorsqu'un nœud de collecte 140 est mis sous tension, le processeur 1401 est capable de lire de la RAM 1402 des instructions et de les exécuter. Ces instructions forment un programme d'ordinateur causant la mise en œuvre, par le processeur 1401, de tout ou partie des procédés décrits en relation avec les Figs 4 à 7.

Le procédé décrit en relation avec les Figs. 4 à 7 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le nœud de collecte 140 comprend de la circuiterie électronique configurée pour mettre en œuvre tout ou partie des procédés décrits en relation avec les Figs 4 à 7.

La **Fig. 11** illustre schématiquement un exemple d'architecture matérielle d'un dispositif 150 de sélection de canaux opérationnels selon un mode particulier de réalisation.

Selon l'exemple d'architecture matérielle représenté à la Fig. 11, le dispositif 150 comprend alors, reliés par un bus de communication 1500 : un processeur ou CPU (« Central Processing Unit » en anglais) 1501 ; une mémoire vive RAM (« Random Access Memory » en anglais) 1502 ; une mémoire morte ROM (« Read Only Memory » en anglais) 1503 ; une unité de stockage 1504 telle qu'un disque dur ou telle qu'un lecteur de support de stockage, e.g. un lecteur de cartes SD (« Secure Digital » en anglais); au moins une interface de communication 1505 permettant au dispositif 150 d'envoyer ou de recevoir des informations.

Le processeur 1501 est capable d'exécuter des instructions chargées dans la RAM 1502 à partir de la ROM 1503, d'une mémoire externe (non représentée), d'un support de stockage (tel qu'une carte SD), ou d'un réseau de communication. Lorsqu'un dispositif 150 est mis sous tension, le processeur 1501 est capable de lire de la RAM 1502 des instructions et de les exécuter. Ces instructions forment un programme d'ordinateur causant la mise en œuvre, par le processeur 1501, de tout ou partie des procédés décrits en relation avec les Figs 4 à 7.

Le procédé décrit en relation avec les Figs. 4 à 7 peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, le dispositif 150 comprend de la circuiterie électronique configurée pour mettre en œuvre tout ou partie des procédés décrits en relation avec les Figs 4 à 7.

## Revendications

1. Un procédé de sélection de canaux opérationnels dans un réseau de communications comprenant une pluralité de nœuds de collecte connectés entre eux par des liens filaires et des liens sans fil, les nœuds étant connectés entre eux uniquement par des liens sans fil forment une branche, les branches étant connectées entre elles par des liens filaires, le procédé comprend les étapes, exécutées par au moins un nœud de collecte de chaque branche, de :
- pour chaque branche, sélectionner (S100) au moins un canal opérationnel, utiliser ledit au moins un canal opérationnel sélectionné pour envoyer des trames de balise et informer (S102) les autres branches du réseau de communications de sa sélection ;
et en ce que le procédé comprend les étapes, exécutées par le au moins un nœud de collecte de chaque branche ou par un dispositif de sélection de canaux opérationnels, de :
- pour chaque branche, déterminer (S104) s'il existe au moins un canal opérationnel sélectionné en commun entre ladite branche et une autre branche ;
- identifier (S106) au moins un groupe de branches dans lequel chaque branche a au moins un canal opérationnel sélectionné en commun avec une autre branche dudit groupe et dans lequel chaque branche voit d'un point de vue propagation radio au moins une autre branche dudit ensemble ;
- pour chaque groupe de branches identifié, sélectionner (S108) au moins un canal opérationnel en réalignant au sein du groupe les sélections d'au moins un canal opérationnel faites par branche ;
- pour chaque groupe de branches, appliquer (S110) le au moins un canal opérationnel sélectionné par ledit groupe.

2. Le procédé selon la revendication 1, dans lequel identifier (S106) au moins un groupe de branches comprend :
- pour chaque branche avec au moins un canal sélectionné en commun avec une autre branche, détecter (S106-1) les autres branches vues d'un point de vue propagation radio par ladite branche, une branche étant vue par une autre branche si un nœud de ladite branche perçoit un signal en provenance d'un nœud de l'autre branche avec un niveau de signal supérieur à une valeur de seuil ; et
- identifier (S106-2) au moins un groupe de branches en réponse auxdites détections.

3. Le procédé selon la revendication 1 ou 2, dans lequel pour chaque groupe de branches identifié, sélectionner (S108) au moins un canal opérationnel en réalignant au sein du groupe les sélections d'au moins un canal opérationnel faites par branche comprend sélectionner, pour ledit groupe identifié, ledit au moins un canal opérationnel de la branche du groupe qui voit le plus de branches d'un point de vue propagation radio.

4. Le procédé selon l'une des revendications 1 à 3, dans lequel sélectionner, pour ledit groupe identifié, ledit au moins un canal opérationnel de la branche du groupe qui voit le plus de branches d'un point de vue propagation radio comprend en cas d'égalité entre deux branches sélectionner ledit au moins un canal opérationnel de la branche parmi lesdites deux branches avec un score le plus élevé, ledit score étant représentatif d'un pourcentage de temps libre de transmission.

5. Le procédé selon l'une des revendications 1 à 3, dans lequel sélectionner, pour ledit groupe identifié, ledit au moins un canal opérationnel de la branche du groupe qui voit le plus de branches d'un point de vue propagation radio comprend en cas d'égalité entre deux branches sélectionner ledit au moins un canal opérationnel de la branche parmi lesdites deux branches dont un nœud coordinateur a l'adresse MAC la plus petite.

6. Le procédé selon l'une des revendications 1 à 3, dans lequel sélectionner, pour ledit groupe identifié, ledit au moins un canal opérationnel de la branche du groupe qui voit le plus de branches d'un point de vue propagation radio comprend en cas d'égalité entre deux branches sélectionner ledit au moins un canal opérationnel de la branche parmi lesdites deux branches dont un nœud coordinateur a l'adresse MAC la plus grande.

7. Un réseau de communications comprenant une pluralité de nœuds de collecte connectés entre eux par des liens filaires et des liens sans fil, les nœuds étant connectés entre eux uniquement par des liens sans fil forment une branche, les branches étant connectées entre elles par des liens filaires, au moins un nœud de collecte de chaque branche est configuré pour :
- pour chaque branche, sélectionner (S100) au moins un canal opérationnel, utiliser ledit au moins un canal opérationnel sélectionné pour envoyer des trames de balise et informer (S102) les autres branches du réseau de communications de sa sélection ;
et en ce que le au moins un nœud de collecte de chaque branche ou un dispositif de sélection de canaux opérationnels du réseau de communication est configuré pour :
- pour chaque branche, déterminer (S104) s'il existe au moins un canal opérationnel sélectionné en commun entre ladite branche et une autre branche ;
- identifier (S106) au moins un groupe de branches dans lequel chaque branche a au moins un canal opérationnel sélectionné en commun avec une autre branche dudit groupe et dans lequel chaque branche voit d'un point de vue propagation radio au moins une autre branche dudit ensemble ;
- pour chaque groupe de branches identifié, sélectionner (S108) au moins un canal opérationnel en réalignant au sein du groupe les sélections d'au moins un canal opérationnel faites par branche;
- pour chaque groupe de branches, appliquer (S110) le au moins un canal opérationnel sélectionné par ledit groupe.

8. Un dispositif de sélection de canaux opérationnels dans un réseau de communications comprenant une pluralité de nœuds de collecte connectés entre eux par des liens filaires et des liens sans fil, **caractérisé en ce que** les nœuds connectés entre eux uniquement par des liens sans fil forment une branche, les branches étant connectées entre elles par des liens filaires, chaque branche, sélectionnant (S100) au moins un canal opérationnel, utilisant ledit au moins un canal opérationnel sélectionné pour envoyer des trames de balise et informant (S102) les autres branches du réseau de communications de sa sélection ;
et **en ce que** ledit dispositif est configuré pour :
- pour chaque branche, déterminer (S104) s'il existe au moins un canal opérationnel sélectionné en commun entre ladite branche et une autre branche ;
- identifier (S106) au moins un groupe de branches dans lequel chaque branche a au moins un canal opérationnel sélectionné en commun avec une autre branche dudit groupe et dans lequel chaque branche voit d'un point de vue propagation radio au moins une autre branche dudit ensemble ;
- pour chaque groupe de branches identifié, sélectionner (S108) au moins un canal opérationnel en réalignant au sein du groupe les sélections d'au moins un canal opérationnel faites par branche;
- pour chaque groupe de branches, configurer le canal opérationnel à appliquer (S110) avec le au moins un canal opérationnel sélectionné pour ledit groupe.

9. Un produit programme d'ordinateur comprenant des instructions pour mettre en œuvre le procédé de sélection de canaux opérationnels selon l'une quelconque des revendications 1 à 6, lorsque ledit programme est exécuté par un processeur.

10. Un support de stockage stockant un programme d'ordinateur comprenant des instructions pour mettre en œuvre le procédé de sélection de canaux opérationnels selon l'une quelconque des revendications 1 à 6, lorsque ledit programme est exécuté par un processeur.

## Patentansprüche

1. Verfahren zur Auswahl von Betriebskanälen in einem Kommunikationsnetz, das eine Mehrzahl von Sammelknoten umfasst, die durch Drahtverbindungen und Drahtlosverbindungen miteinander verbunden sind, wobei die Knoten, die nur durch Drahtlosverbindungen miteinander verbunden sind, einen Zweig bilden, wobei die Zweige durch Drahtverbindungen miteinander verbunden sind, das Verfahren die folgenden Schritte umfasst, die durch wenigstens einen Sammelknoten jedes Zweigs ausgeführt werden:
- für jeden Zweig, Auswählen (S100) wenigstens eines Betriebskanals, Verwenden des wenigstens einen ausgewählten Betriebskanals zum Senden von Beacon-Frames und Informieren (S102) der anderen Zweige des Kommunikationsnetzes über seine Auswahl;
und dadurch, dass das Verfahren die folgenden Schritte umfasst, die durch den wenigstens einen Sammelknoten jedes Zweigs oder durch eine Vorrichtung zur Auswahl von Betriebskanälen ausgeführt werden:
- für jeden Zweig, Bestimmen (S104), ob wenigstens ein ausgewählter, zwischen dem Zweig und einem anderen Zweig gemeinsamer Betriebskanal vorhanden ist;
- Ermitteln (S106) wenigstens einer Gruppe von Zweigen, in der jeder Zweig wenigstens einen ausgewählten, mit einem anderen Zweig der Gruppe gemeinsamen Betriebskanal aufweist und in der jeder Zweig von einem Standpunkt der Funkausbreitung aus wenigstens einen anderen Zweig der Anordnung sieht;
- für jede ermittelte Gruppe von Zweigen, Auswählen (S108) wenigstens eines Betriebskanals durch Neuausrichtung der Auswahlen wenigstens eines Betriebskanals, die pro Zweig getroffen wurden, innerhalb der Gruppe;
- für jede Gruppe von Zweigen, Anwenden (S110) des wenigstens einen durch die Gruppe ausgewählten Betriebskanals.

2. Verfahren nach Anspruch 1, wobei Ermitteln (S106) wenigstens einer Gruppe von Zweigen Folgendes umfasst:
- für jeden Zweig mit wenigstens einem ausgewählten, mit einem anderen Zweig gemeinsamen Kanal, Detektieren (S106-1) der anderen Zweige, die von einem Standpunkt der Funkausbreitung aus von dem Zweig gesehen werden, wobei ein Zweig von einem anderen Zweig gesehen wird, wenn ein Knoten des Zweigs ein Signal von einem anderen Knoten des anderen Zweigs mit einem Signalpegel wahrnimmt, der größer als ein Schwellenwert ist; und
- Ermitteln (S106-2) wenigstens einer Gruppe von Zweigen als Reaktion auf die Detektionen.

3. Verfahren nach Anspruch 1 oder 2, wobei für jede ermittelte Gruppe von Zweigen Auswählen (S108) wenigstens eines Betriebskanals durch Neuausrichtung der Auswahlen wenigstens eines Betriebskanals, die pro Zweig getroffen wurden, innerhalb der Gruppe Auswählen, für die ermittelte Gruppe, des wenigstens einen Betriebskanals des Zweigs der Gruppe umfasst, der die meisten Zweige von einem Standpunkt der Funkausbreitung aus sieht.

4. Verfahren nach einem der Ansprüche 1 bis 3, wobei Auswählen, für die ermittelte Gruppe, des wenigstens einen Betriebskanals des Zweigs der Gruppe, der die meisten Zweige von einem Standpunkt der Funkausbreitung aus sieht, bei Gleichheit zwischen zwei Zweigen Auswählen des wenigstens einen Betriebskanals des Zweigs aus den zwei Zweigen mit einem höchsten Score umfasst, wobei der Score für einen Prozentsatz einer freien Übertragungszeit steht.

5. Verfahren nach einem der Ansprüche 1 bis 3, wobei Auswählen, für die ermittelte Gruppe, des wenigstens einen Betriebskanals des Zweigs der Gruppe, der die meisten Zweige von einem Standpunkt der Funkausbreitung aus sieht, bei Gleichheit zwischen zwei Zweigen Auswählen des wenigstens einen Betriebskanals des Zweigs aus den zwei Zweigen, von dem ein Koordinationsknoten die niedrigste MAC-Adresse aufweist, umfasst.

6. Verfahren nach einem der Ansprüche 1 bis 3, wobei Auswählen, für die ermittelte Gruppe, des wenigstens einen Betriebskanals des Zweigs der Gruppe, der die meisten Zweige von einem Standpunkt der Funkausbreitung aus sieht, bei Gleichheit zwischen zwei Zweigen Auswählen des wenigstens einen Betriebskanals des Zweigs aus den zwei Zweigen, von dem ein Koordinationsknoten die höchste MAC-Adresse aufweist, umfasst.

7. Kommunikationsnetz, das eine Mehrzahl von Sammelknoten umfasst, die durch Drahtverbindungen und Drahtlosverbindungen miteinander verbunden sind, wobei die Knoten, die nur durch Drahtlosverbindungen miteinander verbunden sind, einen Zweig bilden, wobei die Zweige durch Drahtverbindungen miteinander verbunden sind, wenigstens ein Sammelknoten jedes Zweigs für Folgendes konfiguriert ist:
- für jeden Zweig, Auswählen (S100) wenigstens eines Betriebskanals, Verwenden des wenigstens einen ausgewählten Betriebskanals zum Senden von Beacon-Frames und Informieren (S102) der anderen Zweige des Kommunikationsnetzes über seine Auswahl;
und dadurch, dass der wenigstens eine Sammelknoten jedes Zweigs oder eine Vorrichtung zur Auswahl von Betriebskanälen des Kommunikationsnetzes für Folgendes konfiguriert ist:
- für jeden Zweig, Bestimmen (S104), ob wenigstens ein ausgewählter, zwischen dem Zweig und einem anderen Zweig gemeinsamer Betriebskanal vorhanden ist;
- Ermitteln (S106) wenigstens einer Gruppe von Zweigen, in der jeder Zweig wenigstens einen ausgewählten, mit einem anderen Zweig der Gruppe gemeinsamen Betriebskanal aufweist und in der jeder Zweig von einem Standpunkt der Funkausbreitung aus wenigstens einen anderen Zweig der Anordnung sieht;
- für jede ermittelte Gruppe von Zweigen, Auswählen (S108) wenigstens eines Betriebskanals durch Neuausrichtung der Auswahlen wenigstens eines Betriebskanals, die pro Zweig getroffen wurden, innerhalb der Gruppe;
- für jede Gruppe von Zweigen, Anwenden (S110) des wenigstens einen durch die Gruppe ausgewählten Betriebskanals.

8. Vorrichtung zur Auswahl von Betriebskanälen in einem Kommunikationsnetz, das eine Mehrzahl von Sammelknoten umfasst, die durch Drahtverbindungen und Drahtlosverbindungen miteinander verbunden sind, **dadurch gekennzeichnet, dass** die Knoten, die nur durch Drahtlosverbindungen miteinander verbunden sind, einen Zweig bilden, wobei die Zweige durch Drahtverbindungen miteinander verbunden sind, wobei jeder Zweig wenigstens einen Betriebskanal auswählt (S100), den wenigstens einen ausgewählten Betriebskanal verwendet, um Beacon-Frames zu senden, und die anderen Zweige des Kommunikationsnetzes über seine Auswahl informiert (S102);
und dadurch, dass die Vorrichtung für Folgendes konfiguriert ist:
- für jeden Zweig, Bestimmen (S104), ob wenigstens ein ausgewählter, zwischen dem Zweig und einem anderen Zweig gemeinsamer Betriebskanal vorhanden ist;
- Ermitteln (S106) wenigstens einer Gruppe von Zweigen, in der jeder Zweig wenigstens einen ausgewählten, mit einem anderen Zweig der Gruppe gemeinsamen Betriebskanal aufweist und in der jeder Zweig von einem Standpunkt der Funkausbreitung aus wenigstens einen anderen Zweig der Anordnung sieht;
- für jede ermittelte Gruppe von Zweigen, Auswählen (S108) wenigstens eines Betriebskanals durch Neuausrichtung der Auswahlen wenigstens eines Betriebskanals, die pro Zweig getroffen wurden, innerhalb der Gruppe;
- für jede Gruppe von Zweigen, Konfigurieren des anzuwendenden (S110) Betriebskanals mit dem wenigstens einen für die Gruppe ausgewählten Betriebskanal.

9. Computerprogrammprodukt, das Anweisungen zur Durchführung des Verfahrens zur Auswahl von Betriebskanälen nach einem der Ansprüche 1 bis 6 bei Ausführung des Programms durch einen Prozessor umfasst.

10. Speichermedium, das ein Computerprogramm speichert, das Anweisungen zur Durchführung des Verfahrens zur Auswahl von Betriebskanälen nach einem der Ansprüche 1 bis 6 bei Ausführung des Programms durch einen Prozessor umfasst.

## Claims

1. A. method for selecting operational channels in a communication network comprising a plurality of gathering nodes connected together by cable links and wireless links, the nodes being connected together solely by wireless links forming a branch, the branches being connected together by cable links, the method comprises the steps, performed by at least one gathering node of each branch, of:
- for each branch, selecting (S100) at least one operational channel, using said at least one selected operational channel for sending beacon frames and informing (S102) the other branches of the communication network of the selection thereof;
and in that the method comprises the steps, performed by the at least one gathering node of each branch or by an operational-channel selection device, of:
- for each branch, determining (S104) whether there exists at least one selected operational channel in common between said branch and another branch;
- identifying (S106) at least one group of branches wherein each branch has at least one selected operational channel in common with another branch in said group and wherein each branch sees from a radio-propagation point of view at least one other branch in said set;
- for each group of branches identified, selecting (S108) at least one operational channel by realigning within the group the selections of at least one operational channel made by branch;
- for each group of branches, applying (S110) the at least one operational channel selected by said group.

2. The method according to claim 1, wherein identifying (S106) at least one group of branches comprises:
- for each branch with at least one selected channel in common with another branch, detecting (S106-1) the other branches seen from a radio-propagation point of view by said branch, a branch being seen by another branch if a node in said branch perceives a signal coming from a node in the other branch with a signal level above a threshold value; and
- identifying (S106-2) at least one group of branches in response to said detections.

3. The method according to claim 1 or 2, wherein, for each group of branches identified, selecting (S108) at least one operational channel by realigning within the group the selections of at least one operational channel made by branch comprises selecting, for said identified group, said at least one operational channel of the branch in the group that sees the most branches from a radio-propagation point of view.

4. The method according to one of claims 1 to 3, wherein selecting, for said identified group, said at least one operational channel of the branch in the group that sees the most branches from a radio-propagation point of view comprises, in the case of equality between two branches, selecting said at least one operational channel of the branch from said two branches with a highest score, the score representing a percentage of free transmission time.

5. The method according to one of claims 1 to 3, wherein selecting, for said identified group, said at least one operational channel of said branch in the group that sees the most branches from a radio-propagation point of view comprises, in the case of equality between two branches, selecting said at least one operational channel of the branch from said two branches a coordinator node of which has the smallest MAC address.

6. The method according to one of claims 1 to 3, wherein selecting, for said identified group, said at least one operational channel of said branch in the group that sees the most branches from a radio-propagation point of view comprises, in the case of equality between two branches, selecting said at least one operational channel of the branch from said two branches a coordinator node of which has the largest MAC address.

7. A communication network comprising a plurality of gathering nodes connected together by cable links and wireless links, the nodes being connected together solely by wireless links form a branch, the branches being connected together by cable links, said communication network is configured to:
- for each branch, select (S100) at least one operational channel, use said at least one selected operational channel for sending beacon frames and inform (S102) the other branches of the communication network of the selection thereof;
and in that the at least one gathering node of each branch or an operational-channel selection device of the communication network is configured to:
- for each branch, determine (S104) whether there exists at least one selected operational channel in common between said branch and another branch;
- identify (S106) at least one group of branches wherein each branch has at least one selected operational channel in common with another branch in said group and wherein each branch sees from a radio-propagation point of view at least one other branch in said set;
- for each group of branches identified, select (S108) at least one operational channel by realigning within the group the selections of at least one operational channel made by branch;
- for each group of branches, apply (S110) the at least one operational channel selected by said group.

8. A device for selecting operational channels in a communication network comprising a plurality of gathering nodes connected together by cable links and wireless links, the nodes connected together solely by wireless links forming a branch, the branches being connected together by cable links, each branch, selecting (S100) at least one operational channel, using said at least one selected operational channel for sending beacon frames and informing (S102) the other branches of the communication network of the selection thereof, and in that said device is configured to:
- for each branch, determine (S104) whether there is at least one selected operational channel in common between said branch and another branch;
- identify (S106) at least one group of branches wherein each branch has at least one selected operational channel in common with another branch in said group and wherein each branch sees from a radio-propagation point of view at least one other branch in said set;
- for each group of branches identified, select (S108) at least one operational channel by realigning within the group the selections of at least one operational channel made by branch;
- for each group of branches, configure the operational channel to be applied (S110) with the at least one operational channel selected for said group.

9. A computer program product **characterised in that** it comprises instructions for implementing the operational-channel selection method according to any one of claims 1 to 6, when said program is executed by a processor.

10. A storage medium **characterised in that** it stores a computer program comprising instructions for implementing the operational-channel selection method according to any one of claims 1 to 6, when said program is executed by a processor.
